# EUROPEAN PATENT APPLICATION

(11) **EP 2 056 641 A2**
(43) Date of publication of application: **06.05.2009**
(21) Application number: 08018898.0
(22) Date of filing: 29.10.2008
(51) Int. Cl.: H04W 36/14

(54) **Method for supporting quality of service in heterogeneous networks**

(30) Priority: 29.10.2007 KR 20070108950
(71) Applicant: Postech Academy-Industry Foundation, Pohang-shi Kyungsangbuk-do (KR)
(72) Inventor: Suh, Young Joo, Pohang-shi Kyungsangbuk-do (KR); Kim, Deok Jin, Pohang-shi Kyungsangbuk-do (KR); Lim, Wan Seon, Pohang-shi Kyungsangbuk-do (KR); Baek, Joo Young, Pohang-shi Kyungsangbuk-do (KR)
(74) Representative: Samson & Partner

(57) **Abstract**

A method is related to support a QoS service at a handed over network in heterogeneous networks. A serving network requests the mobile terminal to offer demand QoS information, when there is a need of handover. The mobile terminal sends a response message containing the demand QoS information to the serving network, and each candidate network maps the demand QoS information to its network resources to judge whether or not to support the QoS service. And the serving network determines one of the candidate networks that can support the QoS service depending on the judgment of the candidate networks, and provides information on the determined candidate network to the mobile terminal such that the mobile terminal is handed over to the determined candidate network.

## Description

The present invention relates to a vertical handover technique in heterogeneous networks, and more particularly, to a method for supporting a quality of service (QoS), which can guarantee a QoS service even at a handed over network in heterogeneous networks.

In a 4^{th} generation (4G) network where different radio access technologies coexist, it has been recognized that a vertical handover, indicating a handover between heterogeneous networks, is an important issue for efficiently utilizing network resources.

In order to efficiently support mobility between heterogeneous networks, the standardization work associated with the vertical handover is in progress by IEEE 802.21 Media Independent Handoff Working Group. The IEEE 802.21 supports a handover in upper Layers by processing handover related messages issued from different networks by a media independent handoff function (MIHF) that is over the layer 2.

Up to now, studies on the vertical handover have been made mainly under the environment between a 3G network and a WLAN network. However, it is expected in the 4G network that only the above two networks are not sufficient for future communication environments. Also, it is the future prospect that the technology for the broadband radio Internet access called WiBro or WIMAX will be established as a major technology of next-generation mobile communications. The WiBro is known as a service system that has broader cell coverage than a WLAN network and supports a high mobility and a greater bandwidth than 3G network. Therefore, it becomes also important to consider the mobility support between the 3G network and a WiBro network, as well as between the 3G network and the WLAN network.

Moreover, with the advancement of various network technologies, it becomes gradually important that two technical factors, such as mobility between various networks and QoS, should be supported. In this regard, a universal mobile telecommunications system (UMTS) designates four traffic classes for offering a QoS service, while the WiBro designates five traffic classes therefor. These networks also provide control signaling for session management.

One the other hand, since recent researches have been the focus on the support of mobility between heterogeneous networks, QoS has not been considered for the movement in the heterogeneous networks. Thus, it is difficult to provide efficient QoS. In particular, during movement between the heterogeneous networks that define a mechanism for supporting the QoS service, the QoS service has not normally been provided due to the absence of a technology that can integrally manage the QoS service.

It is, therefore, a primary object of the present invention to provide a method for supporting a QoS, which is capable of securing the QoS even during a vertical handover of a multi-mode terminal between heterogeneous networks.

In accordance with the present invention, there is provided a method for supporting a quality of service (QoS) service at a handed over network in heterogeneous networks, which includes:
when there is a need of handover, requesting, at a serving network that is supporting the QoS service to a mobile terminal, the mobile terminal to offer demand QoS information;
sending, at the mobile terminal, a response message containing the demand QoS information of the mobile terminal to the serving network;
checking, at the serving network, whether or not each of candidate networks to which the mobile terminal is to be handed over can support the QoS service; and
determining, at the serving network, one of the candidate networks that can support the QoS service, and providing information on the determined candidate network to the mobile terminal such that the mobile terminal is handed over to the determined candidate network.

The above and other objects and features of the present invention will become apparent from the following description of exemplary embodiments, given in conjunction with the accompanying drawings, in which:
Fig. 1 shows a heterogeneous network system to which an embodiment of the present invention is applied; and
Fig. 2 illustrates a flowchart showing a method for supporting a QoS even when a mobile terminal moves between heterogeneous networks in accordance with an embodiment of the present invention.

Hereinafter, exemplary embodiments of the present invention will be described in detail with reference to the accompanying drawings.

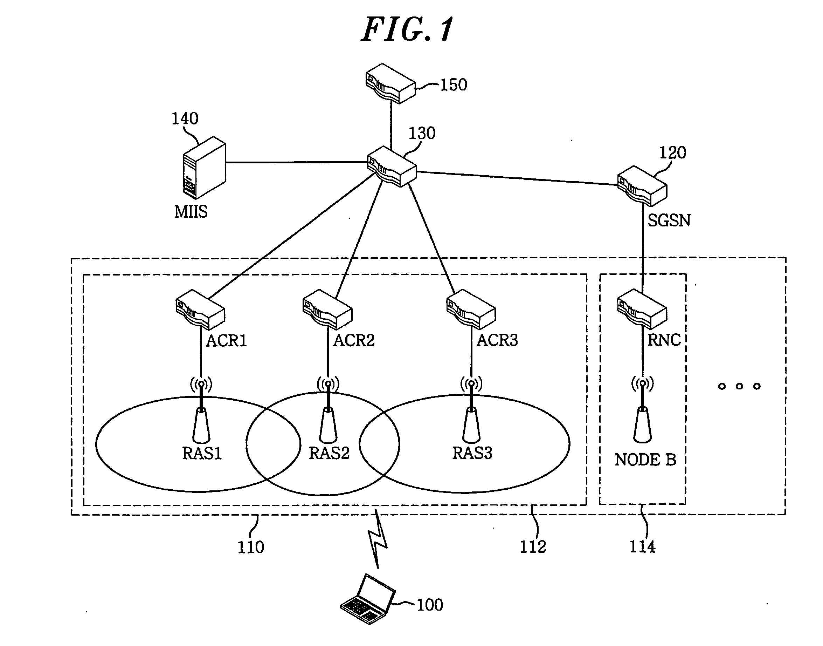

Fig. 1 shows a heterogeneous network system adapted for supporting a QoS even during handover in accordance with the present invention.

The heterogeneous network system shown in Fig. 1 includes a mobile terminal 100, heterogeneous networks 110 having a WiBro network 112, an UMTS network 114 and the like, a serving GPRS support network (SGSN) 120 connected to the UMTS network 114, a router 130 for connecting the WiBro network 112 to the SGSN 120, an MIH information service (MIIS) server 140 connected to the router 130 for supporting a handover of the mobile terminal 100, and a core node 150 connected to the router 130. In this heterogeneous network system, the WiBro network 112 includes remote access server (RAS) and access control router (ACR), which are known in the context of mobile network systems as "Base Station", and the UMTS network 114 includes a Node B and a radio network controller (RNC), which are known in the context of mobile network systems as "Base Station".

Further, the mobile terminal 100 may be implemented by a multi-mode terminal having at least two interfaces for the WiBro network 112 and the UMTS network 114, and can communicate with such base stations as the RAS and the Node B within the two networks 112 and 114 using the two interfaces.

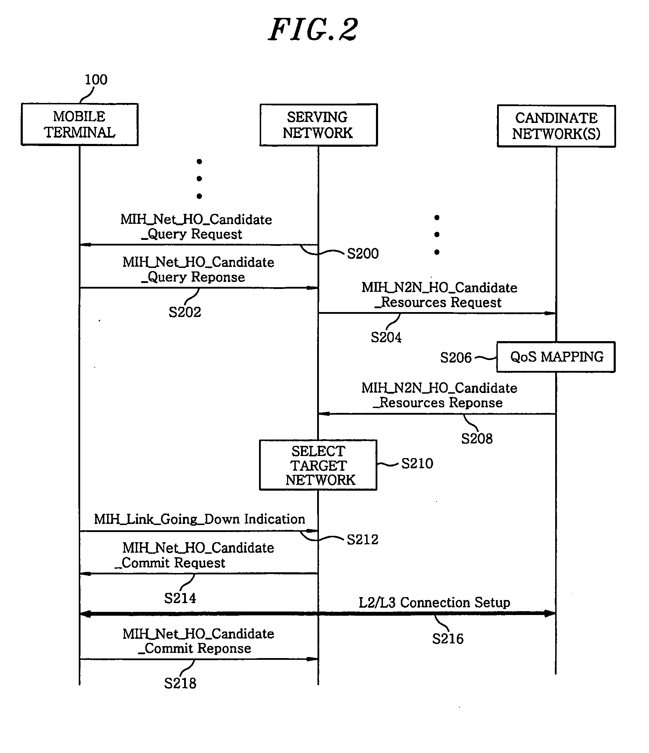

Now, a description will be made for a method for supporting the QoS even when handover in the heterogeneous network system, with reference to Fig. 2.

Fig. 2 illustrates a flowchart showing a method for supporting a QoS even when a mobile terminal moves between heterogeneous networks in accordance with an embodiment of the present invention.

In order that the mobile terminal 100 can receive a QoS service while it moves between the heterogeneous networks, there is a need for a process of checking whether candidate networks to which the mobile terminal 100 is to be handed over can support the QoS service. This checking process is carried out based on MIH messages being communicated therebetween, as will be discussed later.

First of all, suppose that the mobile terminal 100 is being provided with a QoS service from a serving network. If the serving network judges that the mobile terminal 100 needs a handover by analyzing a message provided from the mobile terminal 100, the serving network sends, to the mobile terminal 100, a request message "MIH_Net_HO_Candidate_Query Request" to request QoS information that the mobile terminal 100 is benefited therefrom, at step S200.

In response to this request message, the mobile terminal 100 transfers, to the serving network, QoS constraints required for the mobile terminal itself to benefit a QoS service and their values through a response message "MIH_Net_HO_Candidate_Query Response" at step S202. The response message "MIH_Net_HO_Candidate_Query Response" contains demand QoS information requesting the QoS service that the mobile terminal 100 desires to benefit.

Next, the serving network analyzes the response message "MIH_Net_HO_Candidate_Query Response" to extract the demand information requested by the mobile terminal 100 therefrom. The serving network then sends, to one or more candidate networks, a QoS check message "MIH_N2N_HO_Query_Resource Request" to check whether or not to support the demand QoS information of the mobile terminal 100 at step S204.

In response thereto, the candidate network(s) extract the demand QoS information from the QoS check message "MIH_N2N_HO_Query_Resource Request", and check whether or not to support the demand QoS information requested by the mobile terminal 100 and the status of network resources necessary for the demand QoS information based on their own profile information, at step S206.

Thereafter, the candidate network(s) have the information on whether or not they can support the QoS service contained in the response message "MIH_N2N_HO_Query_Resource Response" and then send the same to the serving network at step S208. That is, as will be further discussed below, the candidate network(s) are different from the serving network, and therefore, they perform the QoS mapping process and then check about whether or not to support the QoS service, to send the response message to the serving network.

Next, the serving network selects a target network of the candidate networks on the basis of the response messages from the candidate networks at step S210. And then, at step S212, the mobile terminal 100 transfers, to the serving network, a link going down (LGD) message "MIH_Link_Going_Down Indication". In response, the serving network sends, to the mobile terminal 100, a message "MIH_Net_HO_Candidate_Commit Request" representing information about the selected candidate network at step S214.

As mentioned earlier, the mobile terminal 100 is handed over to the selected candidate network by sending and receiving the messages between the mobile terminal 100 and the serving network, so that L2 or L3 connection can be established between the mobile terminal 100 and the selected candidate network at step S216.

After the mobile terminal 100 has been handed over to the selected candidate network, it then sends, to the serving network, a response message "MIH_Net_HO_Candidate_Commit Response" responding to the message "MIH_Net_HO_Candidate_Commit Request" at step S218.

According to the MIH draft version 5, each MIH message contains information:

MIH_Net_HO_Candidate_Query Request message having destination identifier, suggested new link list, handover mode, oldLinkAddress, Query Resource List, wherein Query Resource List represents the list of resources to be required at the new candidate network;

MIH_Net_HO_Request_Candidate_Response message having destination identifier, Query Resource List, Handover Ack, Preferred Link List, Requested Resource Set, Error Code, and Status wherein Error Code represents Lists the reason for aborting/declining the handover request; MIH_N2N_HO_Resource_Request message having destination identifier, Query Resource List, IP Configuration Method, DHCP Server Address, FA Address, Access Router Address; and

MIH_N2N_HO_Resource_Response message has destination identifier, Resource Status, Available Resource Set, IP Configuration Method, DHCP Server Address, FA Address, Access Router Address, IP Address Information Status, status.

Based on MIH messages, each MIH message is provided to give and take QoS information, but does not define a Query Resource List (representing a list of resources to be required at candidate networks), an Available Resource Set (containing a set of LinkIdentifier parameters and their corresponding available resources on candidate networks), and a Requested Resource Set (indicating requested resources needed by the mobile terminal), all of which contain information concretely associated with QoS.

Therefore, in the embodiment of the present invention, the types of messages of the Query Request List or the Requested Resource Set and the Available Resource Set are defined in each MIH message being sent and received between the serving network and the mobile terminal 100 and between the serving network and the candidate networks, as depicted in TABLE 1 and TABLE 2. TABLE 1 represents a Query Resource List or a Requested Resource List and TABLE 2 represents an Available Resource Set.

**[TABLE 1]**

| Query Resource List / Requested Resource List | | | |
|---|---|---|---|
| Name | Type | Valid range | Remarks |
| Class | ENUMERATED | 0 - 4 | [Flow-based] Represent the class of the flow |
| | | | [Aggregate-based] Represent the number of supportable classes |
| Bandwidth | ENUMERATED | N/A | Represent the necessary bandwidth |
| Delay | ENUMERATED | N/A | Represent the maximum/tolerant delay maximum/tolerant delay |
| Delay Stats | ENUMERATED | N/A | Represent the degree of delay variation |
| BLER | ENUMERATED | N/A | Represent the guaranteed error rate |

**[TABLE 2]**

| Available Resource Set | | | |
|---|---|---|---|
| Name | Type | Valid range | Remarks |
| Class | ENUMERATED | 0 - 4 | Represent the number of supportable classes |
| Bandwidth | ENUMERATED | N/A | Represent the available of bandwidth |
| Delay | ENUMERATED | N/A | Represent the average e2e delay of service flows |
| Delay Stats | ENUMERATED | | Represent the degree of delay variation |
| BLER | ENUMERATED | | Represent the average error rate of service flows |

In each of the Query Resource List/Requested Resource List and the Available Resource Set, the class, bandwidth, delay, delay status and block error rate (BLER) are defined, as given in TABLES 1 and 2.

In association with TABLES 1 and 2, the mobile terminal 100 may send, to the serving network, the demand QoS information such as the Quary Resource List/Requested Resource List separately in two ways, i.e., a flow-based way and an aggregation-based way, by considering the QoS status for each flow or the entire flows. That is, in case of sending the demand QoS information for each flow, the mobile terminal 100 transfers the demand QoS information stating QoS constraints of each flow to the serving network in the flow-based way. On the other hand, in case of sending the demand QoS information in consideration of the entire flows, the mobile terminal 100 transfers the demand QoS information in which the QoS constraints of all flows currently being serviced are aggregated, to the serving network in the aggregation-based way.

In addition, the Query Resource List and the Available Resource Set may be expressed by multiple lists/sets or single list/set, depending on these two ways.

Meanwhile, there are many different things, regarding whether or not to support different QoS services, a QoS class type, QoS constraints, a service priority and the like to be supported in the heterogeneous networks. Therefore, in order that the mobile terminal 100 can benefit the QoS service from a new candidate network even while it has been handed over in the heterogeneous networks, in behalf of the serving network providing the QoS service, a QoS mapping process should be performed based on the demand QoS information received through the MIH message from the candidate network.

In TABLE 3, there is illustrated the mapping between respective classes and the 1:1 mapping between QoS constraints with respect to the UMTS network 114 and the WiBro network 112. More specifically, when the candidate networks receive the demand QoS information from the serving network, the candidate networks check whether or not the QoS service can be supported by mapping the demand QoS information to their own QoS resources, with reference to TABLE 3.

**[TABLE 3]**

| QoS class and Parameter mapping between UMTS and WiBro | | |
|---|---|---|
| | WiBro | UMTS |
| Class | UGS | Conversational |
| | rtPS | Streaming |
| | nrtPS | Interactive |
| | BE | Background |
| QoS Constraints | Minimum Reserved Traffic Rate | Guaranteed bit rate |
| | Maximum Latency | Transfer Delay |
| | Jitter | Transfer Delay Variation |
| | Channel Feedback Information | Lower bit error rate |

Now, the mapping process will be described in more detail below, for example, under the assumption that the mobile terminal 100 is handed over from the WiBro network 112 to the UMTS network 114. As shown in TABLE 3, the class "UGS" of the WiBro network 112 is mapped to the class "Conventional" of the UMTS network 114, "rtPS" to "Streaming", "nrtPS" to "Interactive", and "BE" to "Background", respectively. That is, when the mobile terminal 100 sends the demand QoS parameters (e.g., minimum reserved rate and jitter), which are set to UGS, rtPS, nrtPS and BE, to the UMTS network 114 via the WiBro network 112, the UMTS network 114 performs the 1:1 mapping for the respective classes in TABLE 3 and then check whether or not to support the QoS service.

Further, in accordance with the present invention, the candidate networks define two kinds of profiles serving as a criterion for supporting the QoS service based on the current status of their own network resources to judge whether or not to support the QoS service. The two kinds of profiles include a class profile and a system profile, which one is selectively employed depending on whether the Query Resource List and the Available Resource Set in each MIH message are received in the flow-based way or the aggregation-based way. In other words, when the Query Resource List and the Available Resource Set are received in the flow-based way, it is judged based on the class profile whether or not the QoS constraints requested by the mobile terminal 100 can be supported. On the contrary, when they are received in the aggregation-based way, it is judged based on the system profile whether or not the QoS constraints requested by the mobile terminal 100 can be serviced.

The class profile has the QoS constraints settled therein that should be met by classes belonging to each flow, and the system profile has the QoS constraints settled therein based on the possible QoS status that the system supports or desires.

For example, as for UGS class in VoIP application of the WiBro network 112 to which the class profile is applied, in case of UGS class, it is judged that the corresponding service can be provided only when a minimum reserved rate and a delay constraint required by the corresponding VoIP application out of systems' current resources are satisfied.

In addition, in case where the system profile is applied, for example, when the candidate networks receives a QoS resource check message from the serving network while having information on Available bandwidth, End-to-end delay, BLER saved therein, the candidate network judges that the QoS service can be supported only when the QoS constraints in the QoS check message are satisfied.

In accordance with the present invention, a serving network, which supports a QoS service to a mobile terminal, collects QoS information through MIH messages, and transfers the collected information to neighbor candidate networks to which the terminal can move to check whether or not to support the QoS service by the candidate networks, and selects a candidate network to support the QoS service. Accordingly, the mobile terminal is handed over to the selected candidate network, so that the mobile terminal can benefit the QoS service even when having been handed over between heterogeneous networks.

While the invention has been shown and described with respect to the preferred embodiments, it will be understood by those skilled in the art that various changes and modification may be made without departing from the scope of the invention as defined in the following claims.

## Claims

1. A method for supporting a quality of service (QoS) service at a handed over network in heterogeneous networks, the method comprising:
when there is a need of handover, requesting, at a serving network that is supporting the QoS service to a mobile terminal, the mobile terminal to offer demand QoS information;
sending, at the mobile terminal, a response message containing the demand QoS information of the mobile terminal to the serving network;
checking, at the serving network, whether or not each of candidate networks to which the mobile terminal is to be handed over can support the QoS service; and
determining, at the serving network, one of the candidate networks that can support the QoS service, and providing information on the determined candidate network to the mobile terminal such that the mobile terminal is handed over to the determined candidate network.

2. The method of claim 1, wherein the checking whether or not each of candidate networks can support the QoS service includes:
sending, at the serving network, the request message containing the demand QoS information to each of the candidate networks;
mapping, at each candidate network, the demand QoS information to the network resources to judge whether or not to support the QoS service to send the response message to the serving network.

3. The method of claim 1, wherein the demand QoS information includes a Query Resource List indicating a list of resources to be required at the candidate networks (class, bandwidth, delay, delay status and block error rate (BLER)), an Available Resource Set containing a set of LinkIdentifier parameters and their corresponding available resources on the candidate networks, and a Requested Resource Set indicating requested resources needed by the mobile terminal.

4. The method of claim 1, wherein each of the candidate networks defines a class profile and a system profile as a criterion for supporting the QoS service based on their network resources.

5. The method of claim 2, wherein the demand QoS information is transferred to the serving network and each of the candidate networks in either one of a flow-based way and an aggregation-based way, and
wherein mapping the demand QoS information to the network resources includes:
when the demand QoS information is provided in the flow-based way, judging whether or not the candidate networks can support the QoS service based on the class profile to send the response message to the serving network.

6. The method of claim 5, wherein mapping the demand QoS information to the network resources includes:
when the demand QoS information is provided in the aggregation-based way, judging whether or not the candidate
networks can support the QoS service based on the system profile to send the response message to the serving network.
